(19) **Europäisches Patentamt**

**European Patent Office**

**Office européen des brevets**

(11) **EP 1 293 516 A1**

(12) **EUROPÄISCHE PATENTANMELDUNG**

(43) Veröffentlichungstag:
19.03.2003 Patentblatt 2003/12

(51) Int Cl.⁷: **C08C 1/08**, C08F 6/20,
B01D 17/04

(21) Anmeldenummer: 02019169.8

(22) Anmeldetag: 02.09.2002

(84) Benannte Vertragsstaaten:
**AT BE BG CH CY CZ DE DK EE ES FI FR GB GR
IE IT LI LU MC NL PT SE SK TR**
Benannte Erstreckungsstaaten:
**AL LT LV MK RO SI**

(30) Priorität: **13.09.2001 DE 10145097**

(71) Anmelder: **BAYER AG**
**51368 Leverkusen (DE)**

(72) Erfinder:
• **Oppenheimer-Stix, Christiane, Dr.**
**41468 Neuss (DE)**
• **Traving, Michael, Dr.**
**51381 Leverkusen (DE)**

(54) **Verfahren zur Aufkonzentrierung von Polymerlatices**

(57) Die Erfindung betrifft ein Verfahren zur Aufkonzentrierung von Polymerlatices, welche mit Hilfe eines Koaleszierhilfsmittels in einem Abscheider in eine Latex-Phase und in eine Serum-Phase getrennt werden können.

**Beschreibung**

Die Erfindung betrifft ein Verfahren zur Aufkonzentrierung von Latex-Dispersionen in einem Abscheider unter Einsatz von Koaleszierhilfsmittel.

Polymerhaltige Latices, wie beispielsweise SBR- (Styrol-Butadien-Rubber) oder NBR- (Acrylnitril-Butadien-Rubber), Polychloropren-, Polybutadien-, Polyisopren-, Naturkautschuklatex, Polyvinylchlorid-, (Meth)acrylat-Dispersionen oder Dispersionen derer Copolymeren, sind üblicherweise in Feststoff-Konzentrationen von über 45 bis 50 % auf dem Markt erhältlich. Diese Konzentrationen können z.B. durch Aufkonzentrieren von niedrigkonzentrierteren Polymerlatices erreicht werden. Naturkautschuklatex wird beispielsweise von 30 % auf 60 % Feststoff aufkonzentriert.

Im Stand der Technik sind verschiedene Verfahren zur Aufkonzentrierung bekannt. In Houben-Weyl, Band XIV/1, Makromol. Stoffe Teil I, 4. Auflage, S. 515 (1961) oder Polymer Colloids, Elsevier Appplied Science Publishers, S. 272 (1985) werden beispielsweise verschiedene Möglichkeiten beschrieben, wie die Zugabe von Elektrolyten, Ausfrieren, Verdampfen des Wassers, Ultrafiltration, Zentrifugation oder der Zusatz von Aufrahmmitteln.

Diese Verfahren zur Aufkonzentrierung der Polymerlatices sind jedoch teilweise mit erheblichen Nachteilen verbunden. So besteht beispielsweise bei der Filtration immer die Gefahr, dass die Poren der Filter verstopfen und ein irreversibles Koagulat entsteht.

Auch die Zentrifugation, die insbesondere für Naturkautschuklatex großtechnisch eingesetzt wird, ist für Syntheselatex problematisch, da die Teilchengrößen oft sehr viel geringer sind als bei Naturlatex. Zusätzlich nachteilig an dem Verfahren der Zentrifugation ist, dass die Zentrifuge oft nur unzureichend abgedichtet werden kann. Dadurch kann es zu einem Lufteintrag in die wässrige Phase und somit zur Schaumbildung kommen, wodurch der Durchsatz nicht in den gewünschten Größenordnungen erzielt werden kann.

Für Syntheselatex kann die Aufkonzentration beispielsweise durch Aufrahmung angewendet werden. Dies geschieht üblicherweise durch Zugabe einer wässrigen Lösung eines Aufrahmmittels, beispielsweise Natriumalginat, Cellulosederivate, Methylcellulose, Agar-Agar, Gelatine, Leim, Pektin, Salze der Polyacrylsäure oder durch zusätzliche Zugabe von Calciumacetatlösung. Es wird weiterhin beschrieben, dass Zugaben von ethylenoxidhaltigen nichtionischen Emulgatoren die Aufkonzentrierung begünstigen.

Eine weitere wichtige Größe, die entscheidend für den Erfolg der Aufrahmung und die Aufrahmgeschwindigkeit ist, ist die Größe der Latexteilchen. Je größer die Latexteilchen, desto besser verläuft die Aufrahmung und eine umso höhere Konzentration des Latex kann erreicht werden. Daher kann es unter Umständen notwendig werden, die Latexteilchen durch eine Vorbehandlung mit z.B. NaCl-Lösung zu vergrößern.

Der Einfluss der Teilchengröße auf die Aufkonzentrierung wird beispielsweise in Ind. Eng. Chem, 43, 407, (1951) beschrieben. Es zeigte sich, dass ein Styrol-Butadien-Latex mit einer Teilchengröße von 78 nm durch Zugabe von 0,1 % Ammoniumalginat (bezogen auf die wässrige Phase) überhaupt nicht aufkonzentriert werden kann, ein Latex mit 360 nm Teilchengröße jedoch sehr gut.

Eine weitere wichtige Einflussgröße ist das Verhältnis des Aufrahmmittels zur Latexmenge. Ist das Verhältnis des Aufrahmmittels zur Latexmenge zu groß, erhält man nur eine Verdickung des Latex und die Aufkonzentrierung wird verlangsamt. Eine zu geringe Menge Aufrahmmittel bewirkt hingegen keine Aufkonzentrierung.

Es wird z.B. auch beschrieben, dass eine Aufkonzentrierung durch Zusatz von Säuren erreicht werden kann. Eine Verschiebung zu niedrigeren pH-Werten erhöht jedoch bei Latices, die durch anionische Emulgatoren stabilisiert sind, die Gefahr, dass der Latex irreversibel koaguliert. Beschrieben sind solche Aufkonzentrierungen für Naturkautschuklatex, Polystyrol-Butadien-Latex, Polychloropren-Latices, Copolymerisate von Polyvinylchlorid- und Polyvinylidenchlorid.

Bei Polychloropren-Latices wird technisch bisher durch Aufkonzentrierung mit einem Aufrahmmittel, wie z.B. Na-Alginat eine Aufkonzentrierung von ca. 30 % Feststoff auf 55 % bis 60 % Feststoffgehalt erreicht. Die Aufrahmgeschwindigkeit variiert jedoch sehr stark in Abhängigkeit von der Teilchengröße. Je kleiner die Teilchengröße, desto langsamer läuft die Aufkonzentrierung ab, so dass sich bei Teilchengrößen kleiner 100 nm Aufrahmzeiten bis zu 14 Tagen ergeben.

Die Aufgabe der vorliegenden Erfindung bestand somit in der Bereitstellung eines neuen Verfahrens zur Aufkonzentrierung von Polymerlatices, insbesondere für Latex-Teilchengrößen von unter 100 nm. Gleichzeitig sollte dabei die Raum-Zeit-Ausbeute für die Aufrahmungsreaktion deutlich erhöht werden.

Gelöst wurde diese Aufgabe, indem ein Polymerlatex mit einem Aufrahmmittel versetzt wird und eine Auftrennung der Latex-Dispersion in einem Abscheider erfolgt, der mit einer Koaleszierhilfe versehen ist.

Koaleszierhilfsmittel werden im Stand der Technik zur Auftrennung von Lösungsmittelgemischen eingesetzt, um in einem Abscheider die Auftrennung nach der Dichte der einzelnen Phasen durchzuführen.

Gegenstand der vorliegenden Erfindung ist ein Verfahren zur Aufkonzentrierung von Polymerlatices, dadurch gekennzeichnet, dass mittels eines Koaleszierhilfsmittels eine Latex-Dispersion in einem Abscheider in Latex und Serum getrennt wird.

Je nach Dichte des dispergierten Polymeren kann bei der erfindungsgemäßen Aufkonzentrierung der Latex als leichtere oder als schwerere Phase erhalten werden. Im Allgemeinen ist bei der Aufkonzentrierung von Polychloropren-Latex der Latex schwerer als das Serum, bei Naturkautschuklatex hingegen ist der Latex leichter als das Serum und muss daher am oberen Ende des Abscheiders abgenommen werden. Das Serum sollte dementsprechend ebenfalls sowohl als leichtere oder schwerere Phase gefunden werden.

Erfindungsgemäß sollte das Serum einen Polymeranteil von kleiner 5 %, bevorzugt kleiner oder gleich 2 % aufweisen.

Das erfindungsgemäße Verfahren zur Aufkonzentrierung von Polymerlatices kann kontinuierlich oder diskontinuierlich erfolgen, bevorzugt ist eine kontinuierliche Verfahrensdurchführung.

Es ist ebenfalls möglich, das erfindungsgemäße Verfahren in einer Kaskadenverschaltung in Gleich- oder Gegenstromfahrweise zu betreiben. Dies ist bevorzugt, wenn nach der Trennung in einer ersten Abscheiderstufe noch eine spätere Nachrahmung des Dicklatex in einer zweiten Aufkonzentrierstufe erfolgt. Gegebenenfalls kann die Auftrennung auch in einem mehrstufigen Verfahren durchgeführt werden.

Eine interne Rückführung des schon aufkonzentrierten Latex ist ebenfalls möglich. Dadurch lässt sich z.B. das Phasenverhältnis dahingehend verändern, dass eine schnellere Phasentrennung erfolgt.

Im ersten Schritt des erfindungsgemäßen Verfahrens wird die Latexdispersion mit dem Aufrahmmittel vermischt und anschließend in den mit Koaleszierhilfsmittel versehenen Abscheider eingeleitet. Nach einer gewissen Verweilzeit im Abscheider, während der die Latexdispersion in zwei Phasen separieren kann, wird der aufkonzentrierte Latex als untere oder obere Phase abgezogen.

Die Phasentrennung kann dabei durch Variation des Verhältnisses von Latexstrom zu Strom der Aufrahmmittellösung beeinflusst werden.

Der erste Schritt des erfindungsgemäßen Verfahrens erfolgt beispielsweise in einem Rührgefäß oder in einem Strömungsrohr, wobei der Latex und das Aufrahmmittel über einen statischen Mischer homogenisiert wird. Dies kann jedoch auch mit beliebigen anderen im Stand der Technik bekannten Vorrichtungen geschehen, jedoch ist darauf zu achten, dass eine gute Durchmischung von Latex und Aufrahmmittel gewährleistet ist. Es sollte des Weiteren eine eventuelle Schaumbildung aufgrund von eingetragener Luft verhindert werden.

Geeignete Polymerlatices sind alle Dispersionen, in welchen der Feststoff in einer flüssigen Phase dispergiert ist und diese Phase wiederum mit einer weiteren flüssigen Phase eine Emulsion bildet. Beispiele sind Latices von Polymeren aus Dienen oder olefinisch ungesättigten Monomeren und deren Copolymeren, wie Polystyrol-Butadien-Latex, Polybutadien-Latex, Polydichlorbutadien-Latex, Polyisopren-Latex, Naturkautschuk-Latex, Acrylnitril-Butadien-Latex, Polychloropren-Latex, Latex eines Copolymers aus Chloropren und Dichlorbutadien, Polyisopren-Latex, Latex von chloriertem Polyisopren oder (Meth)acrylat-Latex. Es sind aber auch Dispersionen von Polyurethanen oder andere Dispersionen geeignet, bei denen Polymere mit Hilfe von Emulgatoren oder Dispergatoren in Wasser dispergiert sind.

Bevorzugte Polymerlatices sind hierbei (Meth)acrylat-Latices, Polychloropren-Latices, Polydichlorbutadien-Latex, Acrylnitril-Butadien-Latices, Naturkautschuklatices oder Latices von deren Copolymeren, besonders bevorzugt sind Polychloropren-Latices und dessen Copolymer-Latices.

Die Konzentration des Polymeren im Ausgangs-Latex beträgt zwischen 20 und 45 %, bevorzugt zwischen 20 bis 40 %.

Für das erfindungsgemäße Verfahren geeignete Aufrahmmittel sind alle im Stand der Technik bekannten Aufrahmmittel, wie z.B. Alginate, Cellulosederivate, Methylcellulose, Agar-Agar, Salze der Poly(meth)acrylsäure, Copolymere aus Alkyl(meth)-acrylaten und/oder Styrol mit ungesättigten Sulfonsäurederivaten oder olefinsch ungesättigten ein-oder mehrbasigen Carbonsäuren oder deren Salze, Salze von zweiwertigen Ionen, wie z.B. Ca-acetat. Es können auch Kombinationen von verschiedenen der zuvor genannten Aufrahmmitteln verwendet werden. Gegebenenfalls können auch ethylenoxidhaltige Emulgatoren mitverwendet werden.

Bevorzugt sind Alginate oder Cellulosederivate.

Das Aufrahmmittel wird bevorzugt als verdünnte wässrige Lösung im erfindungsgemäßen Verfahren eingesetzt. Die Konzentration dieser Lösung beträgt zwischen 1 und 20 Gew.-%, bevorzugt zwischen 0,5 und 10 Gew.-%.

Das Mengenverhältnis von Latex und Aufrahmmittel kann variiert werden, liegt aber in einem Bereich von 0,1 bis 5 Gew.-% Aufrahmmittel bezogen auf den Feststoff der Polymerdispersion, bevorzugt von 0,5 bis 5 Gew.-% Aufrahmmittel. Das Mengenverhältnis ist jedoch in Abhängigkeit vom eingesetzten Aufrahmmittel und Latex zu optimieren. Dies ist beispielsweise durch Handversuche möglich, indem der Latex mit unterschiedlichen Mengen an Aufrahmmittellösung versetzt wird und nach 1 Stunde die Mischung beurteilt wird. Das optimale Verhältnis von Aufrahmmittel zu Latex ist daran zu erkennen, dass eine gute Phasentrennung von Dicklatex und Serum erhalten und eine Nachrahmung des Dicklatex in einer zweiten Aufkonzentrierstufe gegebenenfalls unnötig wird.

Das erfindungsgemäße Verfahren liefert Latices mit Feststoffkonzentrationen von 45 bis 70 %. Bevorzugt sind 50 bis 60 % Feststoff. Die Feststoffkonzentration des Serums sollte möglichst gering sein, so dass das gesamte Polymere in die Latexphase übergetreten ist. Das durch das erfindungsgemäßen Verfahren hergestellte Serum enthält bevorzugt kleiner oder gleich 2 % Polymeranteil. Der Feststoffgehalt des Serums setzt sich vorwiegend aus Emulgator oder aus gelösten Salzen zusammen und beträgt weniger als 5 %, bevorzugt 1 bis 4 %.

Im erfindungsgemäßen Verfahren wird die Mischung aus Aufrahmmittel und Latex durch einen Abscheider geleitet, der mit einem Koaleszierhilfsmittel versehen ist, durch das die Latexmischung strömt.

Ein geeignetes Koaleszierhilfsmittel ist beispielsweise ein Gestrick. Geeignete Werkstoffe für die Herstellung solcher Gestricke sind alle Materialien, die als Faser vorliegen können, wie z.B.

- Kunststoffe, wie Polypropylen, Polyethylen, Polyvinylchlorid, Polyvinylidenfluorid, Polytetrafluorethylen,
- Glasfasern, wie Glasstapelfaser, Glasseide,
- Metalle, wie alle gängigen rost- und säurebeständigen Stähle, Titan, Kupfer, Aluminium, Messing, verzinkter Stahl, Edelstahl.

Auch Kombinationen verschiedener Materialien, wie z.B. Glasfaser/Metall können eingesetzt werden.

Die Auswahl des Werkstoffes sollte sich nach der eingesetzten Aufrahmmittel/Latex-Mischung richten, da die Wahl des Werkstoffes abhängig ist von den Benetzungseigenschaften des Stoffsystems, speziell der dispersen Phase. Es ist daher ebenfalls möglich, Plasma-vorbehandelte Gestricke als Koaleszierhilfe einzusetzen, um die Benetzungseigenschaften gezielt zu beeinflussen.

Ebenfalls als Koaleszierhilfsmittel im Sinne des erfindungsgemäßen Verfahrens geeignet sind Mikrofaserbetten in Filterkerzenform. Geeignete Werkstoffe für diese Koaleszierhilfsmittel sind z.B. Glas, Edelstahl, Hastelloy, Kunststoffe wie Polypropylen oder Polytetrafluorethylen. Auch hier sollte der Werkstoff mit Hinblick auf das System ausgewählt werden, da die Benetzungseigenschaften ebenfalls eine erhebliche Rolle spielen.

Bevorzugte Koaleszierhilfsmittel sind Gestricke oder Mikrofaserbetten in Filterkerzenform aus Glasstapelfaser/Edelstahl oder Polypropylen bzw. Polyester/-Edelstahl. Es können auch unterschiedliche Koaleszierhilfsmittel in einer ersten und zweiten Abscheiderstufe eingesetzt werden. In der zweiten Stufe werden bevorzugt Mikrofaserbetten in Filterkerzenform verwendet.

Die Porosität des Gestricks kann zwischen 90 und 99 %, bevorzugt zwischen 90 und 96 % liegen. Die Porosität P wird über die allgemeine Formel

$$P = (\text{Volumen}_{\text{gesamt}} - \text{Volumen der Fasern}) / \text{Volumen}_{\text{gesamt}}$$

definiert.

Das Volumen des Gestricks im Vergleich zum Volumen des Abscheiders sollte so bemessen sein, dass das freie Volumen des Abscheiders groß genug ist, um ausreichend Verweilzeit für eine eventuelle Nachtrennung zu ermöglichen. Das Volumen des Koaleszierhilfsmittels wird über die spezifische Volumenstrombelastung ermittelt, die z. B. von den Herstellern dieser Koaleszierhilfen erfragt werden kann.

Das für das erfindungsgemäße Verfahren geeignete Abscheidergefäß kann aus unterschiedlichsten Werkstoffen bestehen, beispielsweise aus Glas oder Stahl, je nach Korrosionseigenschaften und den Betriebsbedingungen des Systems. Bevorzugt ist ein Abscheidergefäß aus Glas, wenn nur geringe Mengen durchgesetzt werden müssen, anderenfalls sind Gefäße aus Stahl bevorzugt.

Die Dimensionen des Abscheidergefäßes müssen auf das jeweils einzusetzende System abgestellt werden. Für das erfindungsgemäße Verfahren sollte das Verhältnis von Durchmesser zu Länge des Abscheidergefäßes 2 bis 10, bevorzugt 3 bis 7 betragen.

Zur Unterstützung der Koaleszenz kann es gegebenenfalls notwendig sein, durch Zugabe von z.B. Aufrahmmittellösung oder Wasser das Phasenverhältnis zu einem höheren wässrigen Anteil zu verschieben.

Das erfindungsgemäße Verfahren zur Aufkonzentrierung kann bei Raumtemperatur durchgeführt werden, es ist jedoch auch möglich bei höheren oder tieferen Temperaturen zu arbeiten. Der Prozess sollte bevorzugt so geführt werden, dass weder Wärme zugeführt noch abgeführt werden muss.

Die Verweilzeit der Polymerlatices im Abscheider ist abhängig von der spezifischen Belastung der Koaleszierhilfe und der Viskosität der beiden flüssigen Phasen. Für Gestricke können Zeiten von 15 bis 60 Minuten, bevorzugt von 25 bis 40 Minuten erreicht werden.

## Beispiele

### 1. Beispiel (erfindungsgemäß)

Es wurde ein Polychloropren-Latex eingesetzt, hergestellt gemäß dem Stand der Technik (z.B. in P.F. Johnson, Rubber Chem. Technol. 49, 1976, S. 665 ff) mit einer Teilchengröße von 97 nm (Trübungsdurchmesser gemäß H. Lange, Kolloid-Zeitschrift & Zeitschrift für Polymere, 223 (1968) 24-30). Die Feststoffkonzentration betrug 33 %.

Die Apparatur zur Aufkonzentrierung bestand aus Vorratsgefäßen für Latex und Aufrahmmittellösung und jeweils angeschlossener Pumpe, um die Flüssigkeiten in einen Rühr-Reaktor zu dosieren, wo sie homogen gemischt wurden. Von dort aus wurde die Abmischung in einen gläsernen Abscheider geleitet, der mit einer Koaleszierhilfe (Gestrick) versehen war. Der Latex wurde aus dem unteren Ende des Abscheiders abgenommen, das Serum im oberen Ende. Die Konzentration der wässrigen Aufrahmmittellösung (Grindsted Alginate® FD 901, Fa. Danisco Ingredients, Dänemark) betrug 1,5 Gew.%. Das Gestrick bestand aus Glasstapelfaser/Stainless Steel (RHO-280-SS/GSF-0,28/10 Durchmesser 48 x 100, Durchmesser der Stahlfaser = 0,28 mm, Durchmesser der Glasstapelfaser = 0,1 mm (Durchmesser der Einzelfaser = ca. 0,01 mm), Hersteller: Fa. Rhodius GmbH, Treuchtlinger Straße 23, 91781 Weißenburg) .

Der Abscheider hatte eine Länge von 340 mm und einen Durchmesser von 50 mm. Das Gestrick hatte eine Länge von 100 mm.

Das Verhältnis von Aufrahmmittellösung zu Latex betrug 1 : 6,72. Die Temperatur lag bei 23°C. Der Volumenstrom des Latex betrug 500 ml, der der Alginatlösung 75 ml. Der aufkonzentrierte Latex hatte einen Feststoffgehalt von ca. 52 %, das Serum hatte einen Feststoffgehalt von ca. 3 %. Nach 24 h zeigte sich eine Nachscheidung des Dicklatex von ca. 25 - 30 Vol.%.

2. Beispiel (erfindungsgemäß)

Es wurde der Latex und die Aufrahmlösung gemäß Beispiel 1 verwendet. Die Reaktionsparameter entsprachen ebenfalls denen aus Beispiel 1.

Die Apparatur unterschied sich von der in Beispiel 1 verwendeten durch eine längere Absetzzone des Abscheiders, die auf 490 mm verlängert worden war. Der aufkonzentrierte Latex hatte einen Feststoffgehalt von ca. 50 %, das Serum hatte einen Feststoffgehalt von ca. 3 %. Es zeigte sich eine Nachscheidung im Latex nach 24 h von ca. 1-2 Vol.%.

3. Beispiel (erfindungsgemäß)

Es wurde derselbe Latex und dieselbe Aufrahmlösung verwendet wie in Beispiel 1. Die Reaktionsparameter waren ebenfalls dieselben wie in Beispiel 1.

Die Apparatur unterschied sich von der in Beispiel 1 verwendeten durch eine längere Absetzzone des Abscheiders, die auf 490 mm verlängert worden war und durch die Verlängerung der Koaleszierhilfe auf 200 mm. Das Material des Gestricks wurde ebenfalls verändert. Es wurde ein Kombigestrick aus stainless steel/ Polypropylen eingesetzt (RHO-SS/PP-0,28/0,22, Durchmesser der Stahlfaser = 0,28 mm, Durchmesser der Polypropylenfaser = 0,22 mm 2-fädig, Hersteller: Fa. Rhodius GmbH, Treuchtlinger Straße 23, 91781 Weißenburg) .

Es dauerte ca. 5 h, bis sich ein konstanter Wert für den Feststoffgehalt des aufkonzentrierten Latex einstellte. Er betrug nach 5 h 52 %. Der Feststoffgehalt des Serums lag bei 2,5 %. Es ergab sich nach 24 h eine Nachscheidung im Dicklatex von < 1 Vol.-%.

**4. Vergleichsbeispiel**

In einem 100 m$^3$-Tank wurden 90 m$^3$ desselben Latex wie in Beispiel 1 vorgelegt und unter Rühren mit 11054 kg 1,8 %igen wässrigen Alginatlösung (Grindsted Alginates FD 901, Fa. Danisco Ingredients, Dänemark) versetzt. Nach 1 h wurde der Rührer abgestellt und der Latex bei Normaltemperatur stehen lassen. Die Aufkonzentrierung war nach 12 Tagen abgeschlossen. Der Dicklatex hatte eine Konzentration von 55,6 %. Der Feststoffgehalt des Serums lag bei 2,9 %.

**Patentansprüche**

**1.** Verfahren zur Aufkonzentrierung von Polymerlatices, **dadurch gekennzeichnet, dass** mittels eines Koaleszierhilfsmittels eine Latex-Dispersion in einem Abscheider in Latex und Serum getrennt wird.

**2.** Verfahren gemäß Anspruch 1, **dadurch gekennzeichnet, dass** die Latexdispersion mit einem Aufrahmmittel vermischt und anschließend in den mit Koaleszierhilfsmittel versehenen Abscheider eingeleitet wird, in welchem nach einer gewissen Verweilzeit, in der die Latexdispersion in zwei Phasen separieren kann, der aufkonzentrierte Latex abgezogen wird.

**3.** Verfahren gemäß Anspruch 1 oder 2, **dadurch gekennzeichnet, dass** es sich um eine kontinuierliche Verfahrensdurchführung handelt.

4. Verfahren gemäß einem oder mehreren der Ansprüche 1 bis 3, **dadurch gekennzeichnet, dass** das Verfahren in einer Kaskadenverschaltung in Gleichoder Gegenstromfahrweise betrieben wird.

5. Verfahren gemäß Anspruch 4, **dadurch gekennzeichnet, dass** nach der Trennung in einer ersten Abscheiderstufe noch eine spätere Nachrahmung des Dicklatexes in einer zweiten Aufkonzentrierstufe erfolgt.

6. Verfahren gemäß einem oder mehreren der Ansprüche 1 bis 5, **dadurch gekennzeichnet, dass** die Polymerlatices (Meth)acrylat-Latices, Polychloropren-Latices, Polydichlorbutadien-Latex, Acrylnitril-Butadien-Latices, Naturkautschuklatices oder Latices von deren Copolymeren sind.

7. Verfahren gemäß einem oder mehreren der Ansprüche 1 bis 6, **dadurch gekennzeichnet, dass** Aufrahmmittel Alginate oder Cellulosederivate sind.

8. Verfahren gemäß einem oder mehreren der Ansprüche 1 bis 7, **dadurch gekennzeichnet, dass** Koaleszierhilfsmittel Gestricke oder Mikrofaserbetten in Filterkerzenform sind.

9. Verfahren gemäß Anspruch 8, **dadurch gekennzeichnet, dass** Gestricke oder Mikrofaserbetten in Filterkerzenform aus Glasstapelfaser/Edelstahl oder Polypropylen bzw. Polyester/Edelstahl sind.

**Europäisches Patentamt**

## EUROPÄISCHER RECHERCHENBERICHT

Nummer der Anmeldung

EP 02 01 9169

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | GB 544 449 A (METALLGESELLSCHAFT AG) 14. April 1942 (1942-04-14) * Ansprüche; Beispiel III * * Seite 1, Zeile 61 - Zeile 85 * * Seite 2, Zeile 75 - Zeile 79 * | 1-9 | C08C1/08 C08F6/20 B01D17/04 |
| X | EP 0 527 386 A (BAYER AG) 17. Februar 1993 (1993-02-17) * Zusammenfassung; Ansprüche * | 1,3,6 | |
| A | DE 39 11 538 A (HENKEL KGAA) 11. Oktober 1990 (1990-10-11) * Zusammenfassung; Ansprüche; Abbildung * | 1,8,9 | |
| A | DE 43 05 547 A (MAX RHODIUS GMBH) 25. August 1994 (1994-08-25) * Zusammenfassung; Abbildung 7 * * Spalte 1, Zeile 7 - Zeile 12 * * Seite 2, Zeile 1 - Zeile 5 * | 1,8,9 | |

RECHERCHIERTE SACHGEBIETE (Int.Cl.7)

C08C
C08F
B01D

Der vorliegende Recherchenbericht wurde für alle Patentansprüche erstellt

| Recherchenort | Abschlußdatum der Recherche | Prüfer |
|---|---|---|
| DEN HAAG | 28. November 2002 | Mettler, R-M |

## ANHANG ZUM EUROPÄISCHEN RECHERCHENBERICHT
## ÜBER DIE EUROPÄISCHE PATENTANMELDUNG NR.

EP 02 01 9169

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-11-2002

| Im Recherchenbericht angeführtes Patentdokument | | Datum der Veröffentlichung | Mitglied(er) der Patentfamilie | | Datum der Veröffentlichung |
|---|---|---|---|---|---|
| GB 544449 | A | 14-04-1942 | KEINE | | |
| EP 0527386 | A | 17-02-1993 | DE | 4126483 A1 | 11-02-1993 |
| | | | CA | 2075607 A1 | 11-02-1993 |
| | | | DE | 59202683 D1 | 03-08-1995 |
| | | | EP | 0527386 A1 | 17-02-1993 |
| | | | FI | 923556 A | 11-02-1993 |
| | | | JP | 3183720 B2 | 09-07-2001 |
| | | | JP | 7196727 A | 01-08-1995 |
| | | | US | 5242596 A | 07-09-1993 |
| DE 3911538 | A | 11-10-1990 | DE | 3911538 A1 | 11-10-1990 |
| | | | AT | 91425 T | 15-07-1993 |
| | | | BR | 9007273 A | 17-03-1992 |
| | | | DE | 59001975 D1 | 19-08-1993 |
| | | | WO | 9011810 A1 | 18-10-1990 |
| | | | EP | 0466744 A1 | 22-01-1992 |
| | | | JP | 4504376 T | 06-08-1992 |
| | | | US | 5225084 A | 06-07-1993 |
| DE 4305547 | A | 25-08-1994 | DE | 4305547 A1 | 25-08-1994 |

EPO FORM P0461

Für nähere Einzelheiten zu diesem Anhang : siehe Amtsblatt des Europäischen Patentamts, Nr.12/82